# FASCICULE DE BREVET EUROPEEN

(11) **EP 0 357 531 B1**
(45) Date de publication et mention de la délivrance du brevet: **16.03.1994**
(21) Numéro de dépôt: 89440089.4
(22) Date de dépôt: 28.08.1989
(51) Int. Cl.: A61C 13/225

(54) **Prothèse dentaire sans crochets**
Zahnprothese ohne Haken
Dental prosthesis without clasps

(30) Priorité: 01.09.1988 FR 8811613
(43) Date de publication de la demande: 07.03.1990
(73) Titulaire: Hammann, Philippe, F-57600 Forbach (FR)
(72) Inventeur: Hammann, Philippe, F-57600 Forbach (FR)
(74) Mandataire: Aubertin, François

(56) Documents cités:
- EP-A- 0 169 552

## Description

L'invention concerne une prothèse dentaire sans crochets et son procédé de fabrication.

Bien que les progrès en sciences odontostomatologiques ont été énormes, la carie demeure une maladie de la civilisation. Il en résulte que, malgré les grandes possibilités de soins conservateurs, des progrès de thérapeutiques et de la prise de conscience des malades en ce qui concerne l'hygiène bucco dentaire, on est dans l'impossibilité de conserver l'intégralité de leur denture aux personnes d'un âge très avancé. Les chirurgiens dentistes et les techniciens doivent donc avoir recours fréquemment à des prothèses de remplacement de ces dents manquantes. En résumé, cela va du simple dentier en résine acrylique ou matière plastique avec des crochets acier, jusqu'aux prothèses les plus sophistiquées mobiles ou fixes.

Il existe actuellement, des prothèses mobiles totales ou partielles qui sont fixées respectivement par adhésion ou par crochets ou attachements. Après cicatrisation des alvéoles déshabitées pour les avulsions des dents à extraire la prothèse de remplacement est posée. Parfois une prothèse intermédiaire provisoire est placée dans l'attente de ladite cicatrisation.

On connaît également, notamment par le document EP-A-0.169.552, des prothèses fixées, types bridges ou ponts (à condition de disposer de solides piliers), les ponts en métal ou mixtes sont scellés au ciment sur les moignons ou piliers ou dents, préalablement préparés et taillés de dépouille pour les recevoir.

Ces techniques ne sont pas nouvelles mais constamment améliorées, par le savoir des praticiens et techniciens, par l'instrumentation et les matériaux nouveaux qui arrivent sur le marché. La description ci-dessous n'a pas pour but de décrire des techniques bien connues, mais de situer le problème de ce nouveau type de prothèse inédit par rapport à ce qui existe, et cela dans le but de mieux comprendre par quoi elle se différencie essentiellement des techniques existantes.

Dans le cadre de cette description et des revendications qui s'en suivront, il est intéressant de citer les principaux inconvénients de ces prothèses existantes pour faire ressortir leur contournement par la nouvelle prothèse proposée par la présente invention, mais, il faut le préciser dès à présent, réservée à des cas bien précis.

Les inconvénients des prothèses existantes actuellement sont :
. Dans le cadre de la prothèse mobile :
   - attente de la cicatrisation des plaies transitoire, une prothèse immédiate provisoire peut être posée dans l'attente du comblement des alvéoles pour leur stabilisation (quatre à six mois)
   - une deuxième prothèse définitive doit être réalisée dans ce laps de temps
   - la prothèse mobile retenue par des crochets en métal pouvant entraîner l'abrasion de l'émail. Il existe la possibilité, voire même il est recommandé, de protéger les dents qui vont recevoir ces crochets par des couronnes.

   Pour poser ces couronnes protectrices, il faut tailler, donc mutiler la dent (émail et dentine), la rendre de dépouille. Parfois l'esthétique est difficile à rétablir par ces recouvrements dans lesquels une incrustation résine n'est pas souhaitable. On peut dévitaliser la dent au préalable pour éviter une hypersensibilité pouvant résulter de la taille ou d'un retrait gingival dans le temps, donc nouvelle mutilation précaire. Le crochet, sur couronne ou non n'est pas particulièrement esthétique, dans les parties antérieures. Les zones couronnes nécessitent souvent de la fausse gencive en résine pour assurer une bonne assise et combler les dépressions et les zones rétentives.
. Dans le cadre de la prothèse fixe, telle que couronne et bridge, cette prothèse fixe nécessite une mutilation importante pour les dents globuleuses pour obtenir un parallélisme valable. Souvent la dévitalisation est nécessaire. Les piliers supportent parfois des charges très importantes lorsqu'on ne respecte pas scrupuleusement les normes, d'ou risque important pour les piliers porteurs, pour la parodontie et pour le pont métallique. Il est souvent impossible de résoudre, simultanément, par de telles prothèses, le remplacement des dents manquantes et le rétablissement définitif des normes de l'articulation temporo-mandibulaire et de la réhabilitation gnathologique de l'esthétique, le tout faisant partie de la réhabilitation totale de la fonction et de l'esthétique.

La présente invention a pour originalité et innovation, le fait de contourner les inconvénients en apportant simultanément un maximum de solutions à cet ensemble masticatoire indissociable que sont les dents, l'os alvéolaire et l'os basal.

Ce type de prothèse intéresse au premier chef les cas de certaines pathologies et dysmorphoses qui ne peuvent être résolues que par étapes successives par les moyens existants à ce jour.

Le cas idéal, pour montrer les possibilités de cette nouvelle prothèse serait le cas d'une importante infragnatie molaire, d'une rétroalvéolie chez un édenté partiel ayant d'importantes dystrophies dentaires entraînant une esthétique très disgracieuse dont les dents restantes, atteintes d'une légère mobilité, réclameraient une attelle de solidarisation et de consolidation dont les collets non cariés seraient le siège d'une forte hyperesthésie dentaire.

L'invention telle qu'elle est caractérisée dans les revendications résout le problème et consiste en une prothèse dentaire sans crochets comprenant un revêtement de recouvrement comportant une texture métallique de rétention et une composite coulée sur cette dernière, le revêtement de recouvrement présentant une section approximative en forme de gouttière dont les deux extrémités sont destinées à épouser les côtés vestibulaire et lingual ou palatinal de la gencive et que ledit revêtement de recouvrement est destiné à envelopper la face vestibulaire, la face triturante et la face linguale ou palatinale des dents restantes, la texture métallique de rétention est destinée à venir en contact direct avec ces dents restantes.

L'invention concerne également un procédé de fabrication de cette prothèse, procédé consistant en ce que :
- on recouvre les dents de la texture métallique de rétention de sorte qu'elle est en contact direct, par point, avec les dents tout en enveloppant au moins la face vestibulaire, et la face triturente de ces dents ;
- on applique, en le spatulant, un composite sur la texture métallique de rétention ;
- on procède à la polymérisation du composite afin d'obtenir un revêtement de recouvrement en forme de gouttière dont les deux extrémités sont destinées à les côtés vestibulaire et lingual ou palatinal de la gencive.

Les avantages obtenus grâce à cette invention consistent essentiellement en ce que la prothèse dentaire sans crochets est d'une conception totalement nouvelle, par son universalité due à la complémentarité restauratrice des fonctions qui contribuent à une réhabilitation optimale de la mastication et de l'esthétique du patient, et qu'elle est inédite par l'utilisation de matériaux nouveaux rendue possible par leur association à des formes et structures rétentives spécifiques et spécialement conçues pour faciliter cet assemblage.

Par ailleurs, après traitement et préparation des piliers et des dents restantes sur l'arcade, selon les techniques et thérapeutiques conventionnelles, les principales améliorations simultanées apportées par la prothèse dentaire conforme à l'invention sont :
- conservation rendue possible de pratiquement toutes les dents restantes en bouche et, en tout état de cause, une prolongation utile considérable de celles dont le pronostic est normalement l'avulsion avant prothèse ce qui permet dans tous les cas, un recul de l'échéance, souvent très infirmante, des prothèses totales complètes et notamment, des prothèses inférieures ;
- obtention d'emblée, après quelques préparations classiques en bouche, d'un excellent résultat esthétique, tout en se réservant toutes les possibilités d'intervention nécessaires pour l'équilibrage occlusal ultérieur progressif jusqu'à l'obtention des conditions optimales pour articulation temporo-mandibulaire et le confort du patient ;
- confort accru en libérant au maximum les zones palatines ainsi que les muqueuses gingivales ;
- coiffage systématique de tous les piliers ;
- protection des faces triturantes souvent abrasées à la suite de bruxisme ou à une longue recherche par le patient d'une occlusion de convenance ;
- comblement uniforme possible des pertes tissulaires ou atrophie musculaires ;
- étoffement régulier et harmonieux sans concavités dues aux dents restantes souvent en position de retrait par rapport à la prothèse à réaliser ;
- protection totale dent par dent ;
- isolement de solidarisation de l'ensemble en cas de traumatisme important ;
- isolement permettant une mastication normale lorsque la prothèse est en place, notamment dans le cas d'une monoarthrite temporaire localisée à une ou plusieurs dents ;
- isolement des dents dans le cas d'hyperesthésie dentinaire ou de collets sensibles ;
- correction possible de certaines rétroalvéolies ou infragnaties réduites ;
- correction de certaines inversions de l'articulé.

Un autre avantage essentiel de l'invention réside dans la possibilité de traitement en incluant dans cette gouttière des agents thérapeutiques qui seront portés au niveau de la muqueuse des dents maintenues en place.

Ainsi, il est possible d'utiliser des essences ou huiles essentielles dans le sens large de leur pouvoir hautement thérapeutique et désodorisant tel que traitement de la mauvaise haleine, traitement gingivite, parodontose et autres. Par ailleurs en raison de l'inclusion de l'agent thérapeutique dans la gouttière, on obtient une durée de diffusion supérieure à celle d'un timbre par exemple.

L'invention est exposée ci-après plus en détail à l'aide de dessins représentant seulement un mode d'exécution.

La figure 1 représente une vue en élévation et en coupe d'une dent recouverte de la prothèse dentaire conforme à l'invention
- la figure 2 représente une perspective vestibulaire et occlusale d'une arcade partielle recouverte de la charpente métallique d'après les préformes en cire ajustées préalablement, conformes à l'invention ;
- la figure 3 représente une section en vue agrandie et en perspective d'un fil permettant la réalisation de la texture de rétention dans les zones où les préformes sont adaptables
- la figure 4 représente une vue en plan de la texture de rétention ;
- la figure 5 représente une vue en perspective de la face vestibulaire et occlusale de la texture de rétention appliquée sur la face vestibulaire et occlusale.

On se réfère aux différentes figures.

Selon l'invention, on recouvre la dent 1 d'un revêtement de recouvrement 2 dont la section a une forme approximative d'une gouttière. Les extrémités 3 et 4 épousent le côté vestibulaire 5 et le côté lingual 6, s'il s'agit du maxillaire inférieur ou la face palatine s'il s'agit du maxillaire supérieur de gencives 7.

Le cas échéant, il est souhaitable de prévoir à hauteur du collet 8, un certain vide 9, 10. Pour éviter toute retouche du tissu dentaire, on ne comble pas la zone 9 et 10. Pour éviter une compression de la gencive 7, il est judicieux de réaliser une zone de décharge 11,12 de l'ordre de quelques dixièmes de millimètres.

Conformément à l'invention, le revêtement de recouvrement 2 se compose essentiellement d'une texture métallique de rétention 13 en contact direct par point. Avantageusement, cette texture de rétention 13 enveloppe la face vestibulaire 14, la face triturante 15 des dents, par exemple des dents 17, 18, 19, 20 sur l'arcade 21. Sur cette texture métallique de rétention 13 est appliqué, en le spatulant, un composite 23 dans la forme finale du matériau polymérisé sous l'effet de la pression et de la chaleur à l'aide d'un catalyseur.

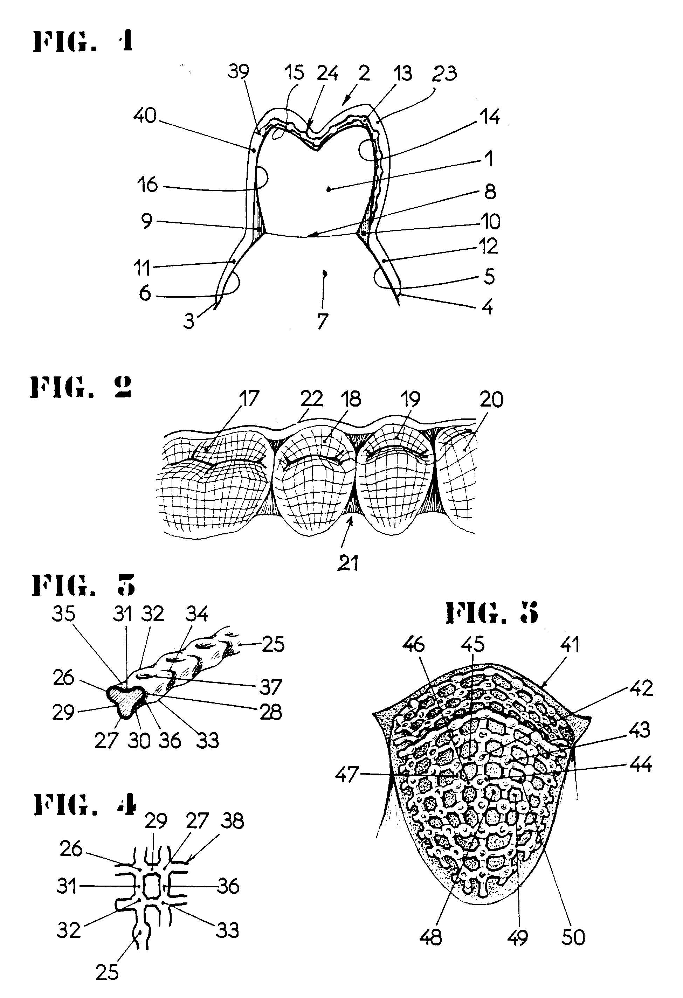

Pour augmenter la liaison et éviter toute dissociation entre le composite 23 et la texture métallique de rétention 13, cette dernière comporte une surface d'ancrage étendue 24. Avantageusement, un des bords longitudinaux aboute à une bordure métallique 40 disposée du côté lingual ou palatinal 6 de la gencive 7 et contre la face linguale ou palatinale 16 de la fraction de l'arcade présentée par les dents 17, 18, 19, 20 (voir figure 1).

Selon un mode de réalisation, la texture de rétention 13 est formée de fils métalliques 25 étendus en travers et constituant la trame de ladite texture métallique de rétention 13. Le cas échéant, les extrémités de ces fils 25 sont rendues solidaires de la bordure métallique 40. Ainsi, on peut obtenir une sorte de ruban effiloché formé par la bordure métallique 40 et les fils métalliques 25 juxtaposés parallèlement et transversalement par rapport à la longueur de l'armature à réaliser.

Comme visible dans la figure 3, les fils métalliques 25 présentent, en section transversale, une forme approximative d'un triangle isocèle dont les sommets 26, 27, 28 sont reliés entre eux par des côtés concaves 29,30,31, permettant d'obtenir une grande surface d'ancrage par augmentation de la surface de rétention pour l'adhésion entre le composite 23 et la texture métallique de rétention 13.

Dans le sens longitudinal, les fils métalliques 25 présentent la même configuration c'est-à-dire une succession de triangles isocèles dont les sommets 26-32 ; 27-33 ; 28-34, sont également reliés longitudinalement par des côtés concaves 35, 36, 37. Ainsi, on augmente la surface d'ancrage 24 dans toutes les directions.

Cette surface d'ancrage 24 peut être augmentée en réalisant dans les côtés concaves 29, 30, 31, 35, 36, 37 soit des trous borgnes, soit des canaux dans lesquels peut également se répandre le composite 23.

Selon un autre mode de réalisation, les fils métalliques 25 sont entrelacés et la texture de rétention comporte une configuration d'un tissu métallique 38 (voir figure 4). Un des bords longitudinaux 39 de ce tissu métallique 38 aboute à la bordure métallique 40 (voir figure 1).

Selon un autre mode de réalisation visible dans la figure 5, la texture métallique de rétention est formée d'une fine tôle métallique 41 ayant une épaisseur de l'ordre de deux à trois dixièmes de millimètres présentant des reliefs 42, 43, 44 reliés par des ponts 45, 46, 47 et des vides 48, 49, 50 séparés par lesdits reliefs 42, 43, 44 et lesdits ponts 45, 46, 47.

## Revendications

1. Prothèse dentaire sans crochets comprenant un revêtement de recouvrement (2) comportant une texture métallique de rétention (13) et une composite (23) coulée sur cette dernière caractérisée en ce que le revêtement de recouvrement (2) présente une section approximative en forme de gouttière dont les deux extrémités (3, 4) sont destinées à épouser les côtés vestibulaire (5) et lingual ou palatinal (6) de la gencive (7) et que ledit revêtement de recouvrement (2) est destiné à envelopper la face vestibulaire (14), la face triturante (15) et la face linguale ou palatinale (16) des dents restantes (1, 17, 19), la texture métallique de rétention (13) est destinée à venir en contact direct avec ces dents restantes (1, 17, 19).

2. Prothèse dentaire sans crochets selon les revendications 1 et 2, caractérisée en ce que la texture métallique de rétention (13) comporte, sur un de ses bords longitudinaux, une bordure métallique (40), qui est destinée à être appliquée sur le côté lingual ou palatinal (6) de la gencive (7) et contre la face linguale ou palatinale (16) des dents restantes (1, 17, 18, 19, 20).

3. Prothèse dentaire sans crochets selon la revendication 2, caractérisée en ce que la texture métallique de rétention (13) comporte des fils métalliques (25) dont une des extrémités est solidaire de la bordure métallique (40), les fils métalliques (25) étant juxtaposés parallèlement et s'étendant perpendiculairement par rapport à ladite bordure métallique (40).

4. Prothèse dentaire sans crochets selon la revendication 2, caractérisée en ce que la texture métallique de rétention (13) comporte des fils métalliques entrelacés (25) constituant un tissu métallique (38) dont un des bords longitudinaux (39) est solidaire de la bordure métallique (40).

5. Prothèse dentaire sans crochets selon les revendications 3 et 4, caractérisée en ce que les fils métalliques (25) comportent une section transversale de forme approximative d'un triangle isocèle dont les sommets (26, 27, 28) sont reliés entre eux par des côtés concaves (20, 30, 31) pour augmenter la surface d'ancrage du composite (23).

6. Prothèse dentaire sans crochets selon les revendications 4 et 5, caractérisée en ce que les fils métalliques (25) comportent dans le sens longitudinal, une succession de triangles isocèles dont les sommets (26-32 ; 27-33 ; 28-34) sont reliés longitudinalement par des côtés concaves (35, 36, 37) pour augmenter dans toutes les directions la surface d'ancrage (24).

7. Prothèse dentaire sans crochets selon les revendications 5 et 6, caractérisée en ce que les côtés concaves (29, 30, 31, 35, 36, 37) comportent des trous borgnes et/ou des canaux dans lesquels peut également se répandre le composite (23).

8. Prothèse dentaire sans crochets selon la revendication 1, caractérisée en ce que la texture métallique de rétention (13) est constituée par une fine tôle métallique (41) comportant des bossages (42, 43, 44) reliés par des ponts (45, 46, 47) et des creux (48, 49, 50) séparés par lesdits bossages (42, 43, 44) et lesdits ponts (45, 46, 47).

9. Procédé pour la fabrication d'une prothèse dentaire sans crochets selon l'une quelconque des revendications précédente, caractérisée par le fait que :
- on recouvre les dents de la texture métallique de rétention (13) de sorte qu'elle est en contact direct par point, avec les dents (1, 17, 19) tout en enveloppant au moins la face vestibulaire (14), et la face triturente (15) de ces dents (1, 17, 19) ;
- on applique, en le spatulant, une composite (23) sur la texture métallique de rétention ;
- on procède à la polymérisation du composite afin d'obtenir un revêtement de recouvrement (2) en forme de gouttière dont les deux extrémités (3, 4) sont destinées à épouser les côtés vestibulaire (5) et lingual ou palatinal (6) de la gencive (7).

## Claims

1. Dental prosthesis without clasps, comprising a covering coating (2) including a retaining metal texture (13) and a compound (23) cast onto this latter, characterized in that the covering coating (2) has a roughly gutter-like cross-section both ends (3, 4) of which are intended for matching the vestibular (5) and lingual or palatal (6) sides of the gum (7) and said covering coating (2) is intended for wrapping the vestibular face (14), the tritural surface (15) and the lingual or palatal face (16) of the remaining teeth (1, 17, 19), the retaining metal texture (13) being intended for directly entering into contact with these remaining teeth (1, 17, 19).

2. Dental prosthesis without clasps, according to claim 1 and 2, characterized in that the retaining metal texture (13) includes, at its one longitudinal edge, a metal rim (40) which is intended for being applied against the lingual or palatal side (6) of the gum (7) and against the lingual or palatal face (16) of the remaining teeth (1, 17, 18, 19, 20).

3. Dental prosthesis without clasps, according to claim 2, characterized in that the retaining metal texture (13) includes metal threads (25) one end of which is integral with the metal rim (40), the metal threads (25) being parallelly juxtaposed and extending perpendicularly to said metal rim (40).

4. Dental prosthesis without clasps, according to claim 2, characterized in that the retaining metal texture (13) includes interwoven metal threads (25) forming a metal tissue (38) one longitudinal edge (39) of which is integral with the metal rim (40).

5. Dental prosthesis without clasps, according to claim 3 and 4, characterized in that the metal threads (25) have a cross-section having roughly the shape of an isosceles triangle the apices (26, 27, 28) of which are connected to each other by concave sides (20, 30, 31) in order to increase the surface for anchoring the compound (23).

6. Dental prosthesis without clasps, according to claim 4 and 5, characterized in that the metal threads (25) include, in the longitudinal direction, a series of isosceles triangles the apices (26-32; 27-33; 38-34) of which are longitudinally connected by concave sides (35, 36, 37) in order to increase in all directions the anchoring surface (24).

7. Dental prosthesis without clasps, according to claim 5 and 6, characterized in that the concave sides (29, 30, 31, 35, 36, 37) include blind holes and/or channels into which the compound (23) can also spread.

8. Dental prosthesis without clasps, according to claim 1, characterized in that the retaining metal texture (13) is formed by a thin metal sheet (41) including embossments (42, 43, 44) connected by bridges (45, 46, 47) and pits (48, 49, 50) separated by said embossments (42, 43, 44) and said bridges (45, 46, 47).

9. Process for manufacturing a dental prosthesis without clasps, according to any of the preceding claims, characterized in that:
- the teeth are covered with the retaining metal texture (13) so that it be spotwise in direct contact with the teeth (1, 17, 19) while wrapping at least the vestibular face (14) and the tritural surface (15) of these teeth (1, 17, 19),
- a compound (23) is applied with a spoon onto the retaining metal texture,
- there is proceeded to the polymerization of the compound, in order to achieve a gutter-like covering coating (2) both ends (3, 4) of which are intended for matching the vestibular (5) and lingual or palatal (6) sides of the gum (7).

## Patentansprüche

1. Zahnprothese ohne Haken, umfassend eine Überdeckungsverkleidung (2), die eine metallische Sperrtextur (13) und ein auf diese letzte formgegossenes Verbundmateriai (23) umfaßt, dadurch gekennzeichnet, daß die Überdeckungsverkleidung (2) einen etwa rinnenförmigen Querschnitt aufweist, dessen beide Enden (3, 4) dazu bestimmt sind, eng an die Vorhof- (5) und Zungen- oder Gaumenseiten (6) des Zahnfleisches (7) zu liegen und die genannte Überdeckungsverkleidung (2) dazu bestimmt ist, die Vorhofseite (14), die Zerkauungsseite (15) und die Zungen- oder Gaumenseite (16) der übrigen Zähne (1, 17, 19) zu umhüllen, wobei die metallische Sperrtextur (13) dazu bestimmt ist, punktweise direkt mit diesen übrigen Zähnen (1, 17, 19) in Berührung zu kommen.

2. Zahnprothese ohne Haken, nach Anspruch 1 und 2, dadurch gekennzeichnet, daß die metallische Sperrtextur (13) an deren einen Längsrand einen Metallsaum (40) umfaßt, der dazu bestimmt ist, gegen die Zungen- oder Gaumenseite (6) des Zahnfleisches (7) und gegen die Zungen- oder Gaumenseite (16) der übrigen Zähne (1, 17, 18, 19, 20) angebracht zu werden.

3. Zahnprothese ohne Haken, nach Anspruch 2, dadurch gekennzeichnet, daß die metallische Sperrtextur (13) Metalldrähte (25) umfaßt, deren eines Ende fest mit dem Metallsaum (40) verbunden ist, wobei die Metalldrähte (25) gleichlaufend nebeneinanderliegen und sich senkrecht zum genannten Metallsaum (40) erstrecken.

4. Zahnprothese ohne Haken, nach Anspruch 2, dadurch gekennzeichnet, daß die metallische Sperrtextur (13) verflochtene Metalldrähte (25) umfaßt, die ein Metalltuch (38) bilden, dessen einer Längsrand (39) fest mit dem Metallsaum (40) verbunden ist.

5. Zahnprothese ohne Haken, nach Anspruch 3 und 4, dadurch gekennzeichnet, daß die Metalldrähte (25) einen Querschnitt aufweisen, der ungefähr die Form eines gleichschenkligen Dreiecks hat, dessen Scheitelpunkte (26, 27, 28) durch hohlrunde Seiten (20, 30, 31) mit einander verbunden sind, um die Verankerungsfläche für das Verbundmaterial (23) zu erhöhen.

6. Zahnprothese ohne Haken, nach Anspruch 4 und 5, dadurch gekennzeichnet, daß die Metalldrähte (25) in der Längsrichtung eine Folge von gleichschenkligen Dreiecken umfaßt, deren Scheitelpunkte (26-32; 27-33; 38-34) in Längsrichtung durch hohlrunde Seiten (35, 36, 37) verbunden sind, um die Verankerungsfläche für das Verbundmaterial (24) in allen Richtungen zu erhöhen.

7. Zahnprothese ohne Haken, nach Anspruch 5 und 6, dadurch gekennzeichnet, daß die hohlrunden Seiten (29, 30, 31, 35, 36, 37) Blindlöcher und/oder Kanäle umfassen, in die sich das Verbundmaterial (23) ebenfalls verbreiten kann.

8. Zahnprothese ohne Haken, nach Anspruch 1, dadurch gekennzeichnet, daß die metallische Sperrtextur (13) aus einem dünnen Metallblech (41) besteht, das durch Brücken (45, 46, 47) verbundene Ausbuchtungen (42, 43, 44) und durch die genannten Ausbuchtungen (42, 43, 44) und die genannten Brücken (45, 46, 47) getrennte Vertiefungen (48, 49, 50) umfaßt.

9. Verfahren zum Herstellen einer Zahnprothese ohne Haken nach irgendeinem der vorgehenden Ansprüche, dadurch gekennzeichnet, daß:
- die Zähne mit der metallischen Sperrtextur (13) so überdeckt werden, daß sie punktweise direkt mit den Zähnen (1, 17, 19) in Berührung kommt, während sie mindestens die Vorhofseite (14) und die Zerkauungsseite (15) dieser Zähne (1, 17, 19) umhüllt,
- ein Verbundmaterial (23) mit einem Spatel auf die metallische Sperrtextur angebracht wird,
- die Polymerisation des Verbundmaterials vorgenommen wird, um eine rinnenförmige Überdeckungsverkleidung (2) zu erhalten, deren beide Enden (3, 4) dazu bestimmt sind, eng an die Vorhof- (5) und Zungen- oder Gaumenseiten (6) des Zahnfleisches (7) zu liegen.
